(19) Europäisches Patentamt
European Patent Office
Office européen des brevets

(11) **EP 3 121 644 A1**

(12) **DEMANDE DE BREVET EUROPEEN**

(43) Date de publication:
**25.01.2017 Bulletin 2017/04**

(51) Int Cl.:
*G02F 1/133* *(2006.01)* *B60J 3/04* *(2006.01)*
*G02C 7/10* *(2006.01)*

(21) Numéro de dépôt: **16180636.9**

(22) Date de dépôt: **21.07.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **23.07.2015 FR 1556981**

(71) Demandeur: **VALEO VISION**
**93012 Bobigny Cedex (FR)**

(72) Inventeurs:
• **EL IDRISSI, Hafid**
**93500 PANTIN (FR)**
• **HUE, David**
**95430 BUTRY SUR OISE (FR)**

(54) **LUNETTES ANTI-ÉBLOUISSEMENT MUNIES D'UN DISPOSITIF DE COMMUTATION AUTOMATIQUE**

(57) L'invention concerne des lunettes anti-éblouissement (1), destinées à être portées par un utilisateur, les lunettes comprenant au moins un écran anti-éblouissement (8) commutable entre un premier état dans lequel l'écran est capable de permettre la vision de l'utilisateur et un deuxième état dans lequel l'écran est capable d'occulter la vision de l'utilisateur, les lunettes (1) comprenant en outre un dispositif de commutation automatique (5) configuré pour détecter une configuration géographique des lunettes (1) afin de commuter l'écran anti-éblouissement (8) dans le deuxième état lorsque les lunettes (1) ont une configuration géographique (6) qui appartient à un ensemble de configurations géographiques prédéterminées (10), et pour commuter l'écran anti-éblouissement (8) dans le premier état, lorsque les lunettes (1) ont une configuration géographique qui n'appartient pas audit ensemble (10).

Fig. 1

EP 3 121 644 A1

**Description**

La présente invention concerne des lunettes anti-éblouissement munies d'un dispositif de commutation automatique.

Dans un certain nombre de situations, un ou plusieurs éléments présents dans la scène de route peuvent perturber une vision claire de cette scène de route, et en particulier peuvent éblouir le conducteur ou les passagers. Si les passagers peuvent détourner le regard de la scène de route pour éviter d'être éblouis, le conducteur ne peut se permettre de quitter des yeux la scène de route, pour des raisons évidentes de sécurité.

Ces situations peuvent se rencontrer de jour, lorsque la luminosité extérieure est variable dans des proportions importantes, par exemple par temps ensoleillé, lorsque divers évènements peuvent alternativement éclairer fortement la scène de route et l'assombrir. Ces situations peuvent également se rencontrer de nuit, lorsque la luminosité extérieure est faible, et impose l'allumage des feux de croisement (encore appelés codes).

Pour éviter d'être ébloui, il a déjà été proposé des lunettes anti-éblouissement adaptatives pour conducteur ou passager de véhicule automobile, les lunettes comprenant des verres munies d'un écran capable d'occulter ou de laisser passer la lumière, le coefficient de transmission des lunettes étant défini par modulation de largeur d'impulsion. La modulation étant opérée électroniquement, les lunettes nécessitent l'emploi de batteries pour commander l'écran.

Par conséquent, les lunettes sont de plus pourvues d'un interrupteur pour les allumer, puis les éteindre lorsqu'elles ne sont pas utilisées. Ainsi, on économise l'énergie stockées dans les batteries afin notamment de ne pas avoir à les recharger souvent et les avoir toujours en état de marche.

Cependant, l'utilisation de ces lunettes demande une manipulation qui n'est pas aisée lorsqu'un conducteur veut s'en servir pendant qu'il conduit. En effet, il doit appuyer une première fois sur l'interrupteur pour les allumer et une deuxième fois pour les éteindre lorsqu'il n'en a plus l'usage. Pour des raisons de sécurité, le conducteur est soit obligé de s'arrêter pour les allumer ou les éteindre, soit obligé de les laisser constamment allumées pour ne pas avoir à effectuer ces manipulations, ce qui diminue l'intérêt d'un tel interrupteur.

Le but de l'invention est de remédier à ces inconvénients, et vise à fournir une paire de lunettes anti-éblouissement qui s'allument automatiquement lorsque l'utilisateur les porte et s'éteignent automatiquement lorsqu'il les enlève sans recourir à une opération supplémentaire.

Pour cela, l'invention se rapporte à des lunettes anti-éblouissement, destinées à être portées par un utilisateur, les lunettes comprenant au moins un écran anti-éblouissement commutable entre un premier état dans lequel l'écran est capable de permettre la vision de l'utilisateur et un deuxième état dans lequel l'écran est capable d'occulter la vision de l'utilisateur, les lunettes comprenant en outre un dispositif de commutation automatique configuré pour détecter une configuration géographique des lunettes afin de commuter l'écran anti-éblouissement dans le deuxième état lorsque les lunettes ont une configuration géographique qui appartient à un ensemble de configurations géographiques prédéterminées, et pour commuter l'écran anti-éblouissement dans le premier état, lorsque les lunettes ont une configuration géographique qui n'appartient pas audit ensemble.

Ainsi, les lunettes fonctionnent automatiquement lorsqu'elles sont positionnées dans la zone prédéterminée et cessent de fonctionner lorsqu'elles sont en dehors, sans avoir besoin de recourir à un interrupteur. En définissant, par exemple, la zone prédéterminée au niveau du visage d'un utilisateur, il suffit que l'utilisateur place les lunettes sur son nez pour déclencher leur fonctionnement. Lorsque l'utilisateur les enlève, les lunettes s'éteignent automatiquement.

Grâce à l'invention, on économise les batteries des lunettes, ce qui permet de les recharger moins souvent, et donc d'éviter un arrêt inopportun en cours de fonctionnement.

Selon différents modes de réalisation de l'invention, qui pourront être pris ensemble ou séparément :

- les configurations géographiques sont des positions et/ou des orientations et/ou des inclinaisons et/ou des mouvements déterminés des lunettes dans un référentiel donné,
- la configuration géographique des lunettes est sa position dans l'espace,
- l'ensemble des configurations géographiques définit au moins une zone prédéterminée dans l'espace,
- le dispositif de commutation comporte une unité de mémoire dans laquelle est stocké ledit ensemble,
- l'occultation par l'écran anti-éblouissement est partielle,
- l'occultation par l'écran anti-éblouissement est sensiblement complète,
- le dispositif de commutation comprend un premier capteur afin de déterminer une position des lunettes,
- le premier capteur est un capteur inertiel,
- le premier capteur est intégré à une armature des lunettes,
- le dispositif de commutation comprend un deuxième capteur agencé à distance des lunettes pour déterminer une position relative des lunettes,
- le dispositif de commutation automatique comprend une caméra disposée à distance de l'armature des lunettes et configurée pour détecter les lunettes lorsqu'elles sont dans la zone prédéterminée,
- le dispositif de commutation automatique comprend des moyens de contrôle de la commutation de l'écran en fonction de la position des lunettes,
- l'écran anti-éblouissement est muni d'un coefficient de transmission variable,
- le coefficient de transmission est déterminé par modulation de largeur d'impulsions avec un rapport cyclique déterminé,

- la modulation est effectuée à fréquence fixe avec un rapport cyclique variable,
- les lunettes comprennent des moyens de commande du rapport cyclique,
- les lunettes comprennent au moins un verre, l'écran anti-éblouissement étant porté par le verre,
- l'écran anti-éblouissement est disposé d'un deuxième côté du verre, la lumière incidente étant destinée à traverser le verre du deuxième côté du verre vers un premier côté,
- ledit écran anti-éblouissement est muni d'une couche à polarisation verticale et d'une couche à polarisation horizontale,
- l'écran anti-éblouissement est muni d'une couche à cristaux-liquides activable agencée entre les deux couches de polarisation.

L'invention se rapporte également à un dispositif d'aide à la conduite de véhicule automobile, notamment nocturne, comprenant des lunettes anti-éblouissement munies d'un dispositif de commutation automatique conforme à l'invention. Le cas échéant, la ou lesdits zones prédéterminées sont des zones définies dans l'habitacle du véhicule.

L'invention sera mieux comprise à la lumière de la description suivante qui n'est donnée qu'à titre indicatif et qui n'a pas pour but de la limiter, accompagnée des dessins joints parmi lesquels :

- la figure 1 illustre de façon schématique, une vue en perspective d'une paire de lunettes anti-éblouissement,
- la figure 2 illustre de façon schématique, une vue en perspective d'une paire de lunettes anti-éblouissement munies d'un dispositif de commutation automatique selon l'invention.

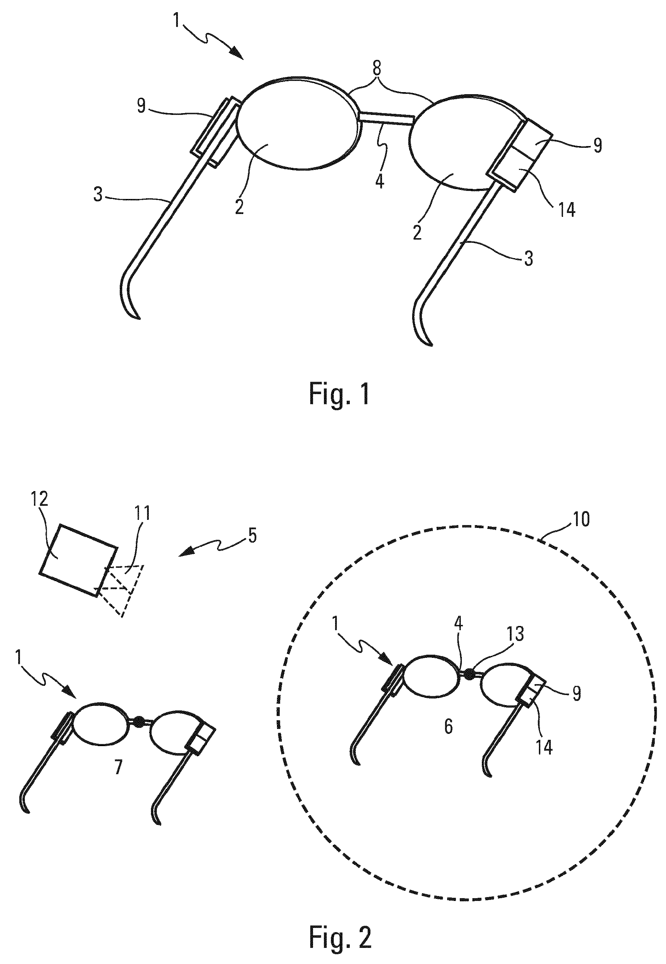

Comme illustré à la figure 1, les lunettes 1 ont ici deux verres 2, deux branches 3 et une armature 4 sur laquelle sont fixés les verres 2. Dans la description de l'invention, le terme verre désigne l'objet fixé à l'armature et à travers lequel le porteur des lunettes regarde la scène qui est devant lui. Le verre 2 peut être fabriqué dans un matériau en verre minéral ou organique par exemple, mais aussi dans tout autre matériau connu de l'homme du métier à cette fin.

Le porteur ou utilisateur des lunettes 1 est situé d'un premier côté des verres 2, et la scène qu'il observe est située d'un deuxième côté des verres 2. Ainsi, la lumière incidente arrive sur les verres 2 en venant du deuxième côté, puis les traverse par la face extérieure des verres, et ressort par la face intérieure vers le porteur des lunettes.

Les lunettes comportent en outre un écran anti-éblouissement 8 commutable entre un premier état dans lequel l'écran est capable de permettre la vision de l'utilisateur et un deuxième état dans lequel l'écran est capable d'occulter la vision de l'utilisateur. L'occultation est ici partielle pour permettre d'atténuer l'intensité de la lumière incidente destinée à traverser le verre vers ledit utilisateur. Ici, l'écran anti-éblouissement 8 est disposé du deuxième côté du verre 2, par exemple sur la face extérieure des verres 2, de l'autre côté de l'utilisateur par rapport aux lunettes.

Pour diminuer l'éblouissement, l'écran anti-éblouissement 8 est muni d'un coefficient de transmission variable permettant d'atténuer l'intensité de la lumière incidente. Selon la valeur du coefficient de transmission, l'écran anti-éblouissement 8 laisse passer une partie plus ou moins importante de la lumière incidente. Le coefficient de transmission de l'écran anti-éblouissement 8 permet de diminuer l'intensité de la lumière incidente pour le confort de l'utilisateur. Le premier état correspond à un coefficient de transmission élevé, et le deuxième état à un coefficient de transmission moindre.

Le coefficient de transmission est déterminé par modulation de largeur d'impulsions. La modulation est effectuée à fréquence fixe, de préférence à au moins 100 Hz, avec un rapport cyclique définissant le coefficient de transmission de l'écran. L'écran anti-éblouissement 8 a donc un coefficient de transmission de la lumière qui varie périodiquement entre :

- une valeur maximale, pour laquelle la transparence est maximale pendant un temps t1, et
- une valeur minimale, pour laquelle la transparence est minimale pendant un temps t2.

Un rapport cyclique $\alpha$ est déterminé par le ratio entre la durée t1 pendant laquelle la transmission est maximale, et la durée T de la période, et varie donc de 0 à 100 % :

$$\alpha = \frac{t_1}{T}$$

En modifiant le rapport cyclique, le temps t1 pendant lequel la transparence est maximale est allongé ou raccourci, par rapport au temps t2 pendant lequel la lumière ne passe pas. Ainsi, en augmentant t1, le rapport cyclique augmente, et en augmentant t2, le rapport cyclique diminue. En valeur moyenne, le coefficient de transmission est ainsi dépendant de la valeur du rapport cyclique $\alpha$.

La scène située devant le porteur des lunettes 1 n'est donc visible que pendant une fraction de temps égale au rapport cyclique $\alpha$. La luminosité apparente, à travers l'écran 8 à transmission variable, est donc diminuée par rapport à la luminosité réelle d'un facteur égal à $(1-\alpha)$.

En outre, lesdites lunettes 1 sont configurées pour adapter le coefficient de transmission de l'écran 8 en fonction de l'intensité de la lumière incidente. Les lunettes permettent de la sorte de le protéger d'une luminosité importante. Pour cela, les lunettes 1 comprennent des moyens de commande 9 du coefficient de transmission agencés ici sur les branches 3 des lunettes 1, près de l'écran 8. Le coefficient de transmission est commandé soit en valeur instantanée, soit en valeur moyenne. Par exemple, en choisissant un rapport cyclique déterminé, on définit un coefficient de transmission correspondant.

Ainsi, le rapport cyclique est variable et choisi en fonction de l'intensité lumineuse de la lumière incidente. Afin de mesurer l'intensité lumineuse de la lumière incidente, les lunettes 1 pourront comprendre un capteur de luminosité, non représenté sur les figures, qui fournit une mesure de l'intensité aux moyens de commande 9. Les moyens de commande 9 déterminent la valeur du rapport cyclique en fonction de cette mesure.

Les lunettes sont encore munies d'une ou plusieurs batteries 14 ou piles, qui apportent l'énergie nécessaire au fonctionnement des écrans 8 des lunettes 1. Les batteries 14 sont de préférence agencées au niveau des moyens de commande 9, dans les branches 3.

Dans un premier mode de réalisation, l'écran anti-éblouissement 8 est muni d'une couche à polarisation verticale et d'une couche à polarisation horizontale, disposées sur le verre, ainsi qu'une couche à cristaux-liquides agencée entre les deux couches de polarisation. Les couches de polarisation polarisent chacune la lumière incidente dans une direction différente. Dans la couche à cristaux-liquides, la direction de la lumière polarisée est modifiée par les cristaux liquides. L'orientation des cristaux liquides détermine la direction de polarisation de la lumière. Ainsi lorsqu'ils sont orientés dans un sens qui modifie la polarisation dans une même direction que celle de la couche de polarisation qui suit, la lumière passe au travers. En revanche, si la direction est différente, la lumière n'est pas transmise au porteur des lunettes 1.

Ainsi, la modulation est effectuée en orientant les cristaux liquides dans la même direction que celle de la couche de polarisation suivante pendant le temps t1, pour transmettre la lumière, puis en l'orientant dans une direction différente pendant le temps t2, pour bloquer la lumière.

Dans un second mode de réalisation, l'écran anti-éblouissement 8 est muni d'une couche micro-électromécanique de type MEMS (pour micro-electro-mechanical system en anglais), disposée sur le verre 2. Cette couche est composée d'éléments microélectroniques actionnables électriquement, qui bloquent ou laissent passer la lumière incidente. Les systèmes micro électromécaniques, sont par exemple du type décrit dans le document US 7 684 105. Ici, la modulation est effectuée en laissant passer la lumière incidente pendant le temps t1, et en la bloquant pendant le temps t2, par actionnement de la couche micro-électromécanique.

Comme montré sur la figure 2, les lunettes 1 comprennent un dispositif de commutation 5 automatique pour éviter des manipulations compliquées et pour économiser l'énergie des batteries 14. Le dispositif de commutation 5 est configuré pour définir un ensemble de configurations géographiques, ici une zone 10, dans laquelle les lunettes 1 fonctionnent automatiquement. Autrement dit, les écrans anti-éblouissement sont commutés dans le deuxième état lorsque les lunettes 1 sont dans cette zone 10 prédéterminée, sans que l'utilisateur n'ait à déclencher lui-même la commutation des écrans.

Pour cela, le dispositif de commutation 5 est configuré pour détecter la position 6, 7 des lunettes afin de pouvoir commuter les écrans anti-éblouissement dans le deuxième état lorsque les lunettes ont une position 6 qui appartient à la zone 10 prédéterminée, et pour commuter les écrans dans le premier état, lorsque les lunettes 1 ont une position 7 en dehors de la zone 10. Le dispositif de commutation 5 automatique comprend en outre des moyens de contrôle 12 de la commutation des écrans par l'entremise des moyens de commande 9.

Dans un premier mode de réalisation, représenté sur la figure 2, le dispositif de commutation 5 comprend une caméra 11 pour détecter la position 6, 7 des lunettes 1, et qui est reliée aux moyens de contrôle 12. La caméra 11 et les moyens de contrôle 12 sont agencés à distance de l'armature 4 des lunettes 1. Les moyens de contrôle 12 disposent par exemple, d'un logiciel de traitement d'image apte à reconnaître les lunettes. Avantageusement l'armature 4 est pourvue d'un signe distinctif 13 facilement reconnaissable par la caméra 11 et les moyens de contrôle 12. Les moyens de contrôle 12 sont en outre dotés d'un émetteur et les lunettes sont dotés d'un récepteur, pour transmettre aux moyens de commande 9 des lunettes 1 un ordre de commutation des écrans anti-éblouissement.

Ainsi, grâce à la caméra 11, lorsque les moyens de contrôle 12 détectent que les lunettes 1 sont dans une première position 6 située à l'intérieur de la zone prédéterminée 10, ils commandent la commutation des écrans anti-éblouissement dans le deuxième état, de préférence selon le procédé décrit précédemment. Et lorsque les moyens de contrôle 12 détectent que les lunettes 1 sont dans une seconde position 7, située à l'extérieure de la zone prédéterminée 10, ils transmettent aux moyens de commande 9 un ordre pour commuter les écrans anti-éblouissement dans le premier état.

De préférence, les moyens de contrôle 12 sont configurés pour commander la commutation des écrans anti-éblouissement dès que les moyens de contrôle 12 détectent les lunettes 1 dans le champ de vision de la caméra 11. Ainsi, la zone prédéterminée 10 est définie par le champ de vision de la caméra 11.

Par exemple, pour une utilisation dans un véhicule automobile, les moyens de contrôle 12 et la caméra 11 sont, par exemple, agencées dans le tableau de bord du véhicule. Le champ de vision de la caméra est dirigé vers le haut du siège du véhicule, par exemple celui du conducteur, de manière à pouvoir détecter si le conducteur porte les lunettes 1 sur son visage. Grâce à l'invention, dès que le conducteur met les lunettes 1 pour éviter d'être ébloui, lesdites lunettes 1 sont automatiquement commutées dans le deuxième état, sans avoir recours à la manipulation d'un interrupteur. Et afin d'économiser l'énergie des batteries 14, lorsque le conducteur retire les lunettes, elles sont automatiquement commutées dans le premier état, en arrêtant ici la modulation des écrans anti-éblouissement.

Dans un second mode de réalisation, non représenté sur les figures, le dispositif de commutation automatique comprend un premier capteur inertiel intégré à l'armature des lunettes afin de déterminer la position des lunettes. Les moyens de contrôle de la commutation des lunettes sont par exemple intégrés à l'armature des lunettes. Le capteur inertiel permet de déterminer une position des lunettes, qui est transmise aux moyens de contrôle de sorte qu'ils déterminent si les lunettes sont dans une zone prédéterminée. La zone prédéterminée est par exemple choisie autour d'une position de référence de l'habitacle du véhicule. L'utilisation et le fonctionnement des lunettes est le même que dans le premier mode de réalisation.

Dans une variante de réalisation du second mode, le dispositif de commutation comprend, en plus d'un premier capteur intégré à l'armature des lunettes, un deuxième capteur inertiel agencé à distance de l'armature des lunettes, par exemple dans le tableau de bord du véhicule. Ainsi, cela permet de déterminer une position relative du premier capteur par rapport au deuxième capteur, et par conséquent des lunettes par rapport au tableau de bord. La zone prédéterminée est ici définie par rapport au deuxième capteur inertiel, qui est fixe. Lorsque le premier capteur est dans la zone prédéterminée, les lunettes sont commutées dans le deuxième état, puis dans le premier état lorsque le premier capteur n'est plus dans la zone. Le dispositif de commutation comprend également un émetteur et un récepteur pour transmettre la position relative entre les deux capteurs.

## Revendications

1. Lunettes anti-éblouissement (1), destinées à être portées par un utilisateur, les lunettes comprenant au moins un écran anti-éblouissement (8) commutable entre un premier état dans lequel l'écran est capable de permettre la vision de l'utilisateur et un deuxième état dans lequel l'écran est capable d'occulter la vision de l'utilisateur, les lunettes (1) comprenant en outre un dispositif de commutation automatique (5) configuré pour détecter une configuration géographique des lunettes (1) afin de commuter l'écran anti-éblouissement (8) dans le deuxième état lorsque les lunettes (1) ont une configuration géographique (6) qui appartient à un ensemble de configurations géographiques prédéterminées (10), et pour commuter l'écran anti-éblouissement (8) dans le premier état, lorsque les lunettes (1) ont une configuration géographique qui n'appartient pas audit ensemble (10).

2. Lunettes selon la revendication 1, dans lesquelles la configuration géographique des lunettes (1) est sa position dans l'espace, et l'ensemble de configurations géographiques (10) définit au moins une zone prédéterminée dans l'espace.

3. Lunettes selon la revendication 2, dans lesquelles le dispositif de commutation (5) comprend un premier capteur apte à déterminer une position des lunettes (1).

4. Lunettes selon la revendication 3, dans lesquelles le dispositif de commutation (5) comprend un deuxième capteur agencé à distance des lunettes (1) pour déterminer une position relative des lunettes (1).

5. Lunettes selon l'une quelconque des revendications 2 à 4, dans lesquelles le dispositif de commutation (5) comprend une caméra (11) disposée à distance de l'armature (4) des lunettes (1) et configurée pour détecter les lunettes lorsqu'elles sont dans la zone prédéterminée.

6. Lunettes selon l'une quelconque des revendications 2 à 5, dans lesquelles le dispositif de commutation (5) automatique comprend des moyens de contrôle (12) de la commutation de l'écran (8) en fonction de la position (6, 7) des lunettes (1).

7. Lunettes selon l'une quelconque des revendications précédentes, dans lesquelles l'écran anti-éblouissement (8) est muni d'un coefficient de transmission variable.

8. Lunettes selon la revendication 7, dans lesquelles le coefficient de transmission est déterminé par modulation de largeur d'impulsions avec un rapport cyclique déterminé.

9. Lunettes selon la revendication 8, dans lesquelles la modulation est effectuée à fréquence fixe avec un rapport cyclique variable.

10. Lunettes selon la revendication 9, dans lesquelles les lunettes (1) comprennent des moyens de commande (9) du rapport cyclique.

11. Lunettes selon l'une quelconque des revendications précédentes, comprenant au moins un verre (2), l'écran anti-éblouissement (8) étant porté par le verre (2).

12. Lunettes selon la revendication 11, dans lesquelles l'écran anti-éblouissement (8) est disposé d'un deuxième côté du verre, la lumière incidente étant destinée à traverser le verre du deuxième côté du verre vers un premier côté.

**13.** Lunettes selon l'une quelconque des revendications précédentes, dans lesquelles ledit écran anti-éblouissement (8) est muni d'une couche à polarisation verticale et d'une couche à polarisation horizontale.

**14.** Lunettes selon la revendication 13, dans lesquelles l'écran anti-éblouissement (8) est muni d'une couche à cristaux-liquides activable agencée entre les deux couches de polarisation.

**15.** Dispositif d'aide à la conduite de véhicule automobile, notamment nocturne, comprenant des lunettes anti-éblouissement (1) munies d'un dispositif de commutation (5) automatique selon l'une quelconque des revendications précédentes.

Fig. 1

Fig. 2

Europäisches
Patentamt

European
Patent Office

Office européen
des brevets

**RAPPORT DE RECHERCHE EUROPEENNE**

Numéro de la demande

EP 16 18 0636

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 684 770 A1 (ESSILOR INT [FR]) 11 juin 1993 (1993-06-11) * le document en entier * ----- | 1-3,6-14 | INV. G02F1/133 B60J3/04 G02C7/10 |
| X | WO 2015/044384 A2 (VALEO VISION [FR]) 2 avril 2015 (2015-04-02) * pages 8-13; figures 1,2,3 * ----- | 1-4,6-15 | |
| A | FR 3 011 091 A1 (VALEO VISION [FR]) 27 mars 2015 (2015-03-27) * page 5 - page 6; figures 1,2 * ----- | 1-15 | |

| | DOMAINES TECHNIQUES RECHERCHES (IPC) |
|---|---|
| | G02C B60J G02B G02F |

Le présent rapport a été établi pour toutes les revendications

| Lieu de la recherche | Date d'achèvement de la recherche | Examinateur |
|---|---|---|
| Munich | 17 novembre 2016 | Queneuille, Julien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 18 0636

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-11-2016

| Document brevet cité au rapport de recherche | | Date de publication | Membre(s) de la famille de brevet(s) | | Date de publication |
|---|---|---|---|---|---|
| FR 2684770 | A1 | 11-06-1993 | AUCUN | | |
| WO 2015044384 | A2 | 02-04-2015 | CN | 105722708 A | 29-06-2016 |
| | | | EP | 3049283 A2 | 03-08-2016 |
| | | | FR | 3010941 A1 | 27-03-2015 |
| | | | US | 2016214467 A1 | 28-07-2016 |
| | | | WO | 2015044384 A2 | 02-04-2015 |
| FR 3011091 | A1 | 27-03-2015 | CN | 105593744 A | 18-05-2016 |
| | | | EP | 3049855 A1 | 03-08-2016 |
| | | | FR | 3011091 A1 | 27-03-2015 |
| | | | US | 2016223816 A1 | 04-08-2016 |
| | | | WO | 2015044148 A1 | 02-04-2015 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7684105 B